# EUROPÄISCHE PATENTSCHRIFT

(11) **EP 2 473 382 B1**
(45) Veröffentlichungstag und Bekanntmachung des Hinweises auf die Patenterteilung: **27.11.2013**
(21) Anmeldenummer: 10766229.8
(22) Anmeldetag: 30.08.2010
(51) Int. Cl.: B60R 21/276, B60R 22/46

(54) **INSASSENSCHUTZVORRICHTUNG MIT SICHERHEITSVENTIL**
OCCUPANT PROTECTION DEVICE WITH SAFETY VALVE
DISPOSITIF DE PROTECTION D'OCCUPANT AVEC SOUPAPE DE SECURITE

(30) Priorität: 04.09.2009 DE 102009040690
(43) Veröffentlichungstag der Anmeldung: 11.07.2012
(73) Patentinhaber: Takata AG, 63743 Aschaffenburg (DE)
(72) Erfinder: BENZ, Jochen, 89077 Ulm (DE); MAST, Lars, 88471 Laupheim (DE); LANG, Jochen, 89077 Ulm (DE); PECHHOLD, Christoph, 89155 Erbach (DE); FLEISCHMANN, Robert, 89233 Neu-Ulm / Pfuhl (DE)
(74) Vertreter: Fischer, Uwe
(86) Internationale Anmeldenummer: PCT/DE2010/001039
(87) Internationale Veröffentlichungsnummer: WO 2011/026474

(56) Entgegenhaltungen:
- EP-A1- 0 807 557
- EP-A2- 1 199 230
- EP-B1- 0 889 809
- EP-B1- 1 781 510
- DE-A1- 10 033 319
- US-A- 5 718 447
- US-A1- 2006 261 583

## Beschreibung

Die Erfindung bezieht sich auf eine Insassenschutzvorrichtung mit einem pyrotechnischen Gasgenerator. Insassenschutzvorrichtungen im Sinne dieser Anmeldung werden beispielsweise durch Bestandteile von Rückhaltesystemen zum Schutz von Fahrzeuginsassen, beispielsweise durch Bestandteile von Gurtaufrollern, Bestandteile von Gurtstraffern oder Bestandteile von Airbageinrichtungen, oder durch Rückhaltesysteme als solche, also beispielsweise durch Gurtaufroller, Gurtstraffer oder Airbageinrichtungen als solche, gebildet.

EP 0 807 557 offenbart eine Insassenschutzvorrichtung mit einem pyrotechnischen Gasgenerator gemäß dem Oberbegriff des Anspruchs 1.

Der Erfindung liegt die Aufgabe zugrunde, eine Insassenschutzvorrichtung mit einem pyrotechnischen Gasgenerator anzugeben, die ein besonders hohes Maß an Sicherheit bietet.

Diese Aufgabe wird erfindungsgemäß durch eine Insassenschutzvorrichtung mit den Merkmalen gemäß Patentanspruch 1 gelöst. Vorteilhafte Ausgestaltungen der erfindungsgemäßen Insassenschutzvorrichtung sind in Unteransprüchen angegeben.

Danach ist erfindungsgemäß eine Insassenschutzvorrichtung mit einem pyrotechnischen Gasgenerator vorgesehen, bei der mit dem Gasgenerator ein nach außen führendes temperaturabhängig arbeitendes Sicherheitsventil in Verbindung steht.

Ein wesentlicher Vorteil der erfindungsgemäßen Insassenschutzvorrichtung ist darin zu sehen, dass diese auch im Falle eines Fahrzeugbrandes ein sehr hohes Maß an Sicherheit für die im Fahrzeug befindlichen Fahrzeuginsassen bietet. Selbst im Brandfalle, wenn also eine sehr hohe Temperatur im Fahrzeug auftritt und der Gasgenerator aufgrund der hohen Temperatur selbsttätig, also ohne gewollte äußere Zündung, auslöst, kann es zu keiner Verletzung der Fahrzeuginsassen kommen; denn das nach außen führende temperaturabhängig arbeitende Sicherheitsventil kann gewährleisten, dass das Sicherheitsventil rechtzeitig öffnet und das von dem Gasgenerator erzeugte Gas durch das Sicherheitsventil nach außen dringen kann. Durch das temperaturabhängig arbeitende Sicherheitsventil lässt sich also gewährleisten, dass Gas des Gasgenerators nach außen abgeleitet wird, wenn eine vorgegebene Grenztemperatur überschritten wird.

Ein weiterer wesentlicher Vorteil der erfindungsgemäßen Insassenschutzvorrichtung besteht darin, dass diese nur für normale Drücke innerhalb des nominalen Betriebstemperaturbandes ausgelegt werden muss, da ein Überdruck durch eine brandbedingte Druckverstärkung und eine damit einhergehende Berstgefahr der gesamten Insassenschutzvorrichtung wegen des Sicherheitsventils nicht berücksichtigt werden muss.

Um ein besonders hohes Maß an Funktionssicherheit im Brandfalle zu gewährleisten, wird es als vorteilhaft angesehen, wenn das Sicherheitsventil ein Verschlusselement umfasst, das das Sicherheitsventil gasdicht, also auch bei Gasbeaufschlagung durch den Gasgenerator, verschließt, solange die Materialtemperatur des Verschlusselements eine Materialgrenztemperatur unterschreitet. Die Verschlussfähigkeit des Materials des Verschlusselements reduziert sich vorzugsweise bei Überschreiten der Materialgrenztemperatur, so dass das Sicherheitsventil, spätestens bei Gasbeaufschlagung durch den Gasgenerator, freigegeben wird. Die Materialgrenztemperatur ist vorzugsweise kleiner als die Selbstentzündungstemperatur des Gasgenerators und vorzugsweise größer als die maximale Temperatur des nominalen Betriebstemperaturbereichs des Gasgenerators. Die maximale nominale Betriebstemperatur eines Gasgenerators liegt üblicherweise bei ca. 100°C.

Ein temperaturabhängig arbeitendes Sicherheitsventil kann beispielsweise durch eine Öffnung oder Bohrung in einem Rohr oder eine Öffnung oder Bohrung in einem gasführenden Träger gebildet sein, die durch einen Stopfen verschlossen ist. Das Material und die Formgestaltung eines solchen Stopfens sind vorzugsweise derart ausgelegt, dass der Stopfen oberhalb einer vorgegebenen Funktionstemperatur, beispielsweise oberhalb von 105°C, seine Festigkeit und/oder seine Gestalt verliert. Ein solcher Stopfen kann beispielsweise durch einen Kunststoffstopfen gebildet sein. Anstelle eines Kunststoffstopfens können auch Stopfen aus anderen Materialien (z. B. Metalle mit einem Schmelzpunkt zwischen 100°C und 130°C) verwendet werden; auch können beispielsweise Stopfen mit einer schmelzbaren Füllung eingesetzt werden. Als Füllung kann beispielsweise eine Legierung, beispielsweise eine Lotlegierung, genutzt werden.

Auch kann zum Verschließen einer Öffnung oder einer Bohrung ein brennbares Material eingesetzt werden, das bei offener Flamme oder Hitze verbrennt und dadurch die Öffnung oder Bohrung freigibt.

Das Sicherheitsventil kann beispielsweise direkt an einem gasführenden Rohr angebracht werden. Alternativ ist es auch möglich, das Sicherheitsventil im Bereich von Trägern zu montieren, die unmittelbar oder mittelbar mit dem Gasgenerator verbunden sind.

Gemäß der Erfindung ist vorgesehen, dass das Sicherheitsventil ein Verschlusselement umfasst, das durch einen einen Stiftkopf umfassenden Stift gebildet ist. Der Stift wird von innen in ein Loch in einer Wand eines Zuführungselements, beispielsweise eines Zuführungsrohrs, derart eingesetzt, dass der Stiftkopf an der Innenseite der Wand anliegt. Anschließend wird das durch das Loch nach außen hindurchragende Stiftende unter Bildung eines Verschlussabschnitts, der im Querschnitt größer als der Querschnitt des Loches ist, plastisch umgeformt. Das temperaturabhängig arbeitende Sicherheitsventil wird in diesem Falle also durch einen plastisch umgeformten Stift mit Stiftkopf gebildet, der durch ein Loch in einer Wand eines Zuführungselements eingesetzt ist. Der Stift besteht vorzugsweise aus einem Material, das bei Überschreiten einer Grenztemperatur seine Verschlussfähigkeit verliert, beispielsweise durch Schmelzen, Deformation oder Verbrennen. Die Grenztemperatur liegt vorzugsweise in einem Temperaturbereich zwischen 110°C und 130°C.

Bei der Insassenschutzvorrichtung handelt es sich bevorzugt um einen Gurtaufroller mit einem Strafferantrieb, der den Gasgenerator, eine mit der Gurtspindel des Gurtaufrollers in Verbindung stehende Antriebsvorrichtung und ein Zuführungselement, insbesondere in Form eines Zuführungsrohres, umfasst, das den Gasgenerator und die Antriebsvorrichtung verbindet. Vorzugsweise sind in dem Zuführungselement mehrere Schubkörper vorhanden, die nach einem Auslösen des Gasgenerators beschleunigt werden und die Antriebsvorrichtung zum Aufwickeln des Sicherheitsgurtes mittelbar oder unmittelbar antreiben. Das Sicherheitsventil umfasst vorzugsweise ein Loch in dem Zuführungselement, wobei das Loch besonders bevorzugt in dem Abschnitt zwischen dem Gasgenerator und dem ersten Schubkörper angeordnet ist.

Die Erfindung bezieht sich darüber hinaus auf ein Verfahren zum Herstellen einer Insassenschutzvorrichtung mit einem pyrotechnischen Generator gemäß dem Patentanspruch 4.

Die Erfindung wird nachfolgend anhand von Ausführungsbeispielen näher erläutert; dabei zeigen beispielhaft
- Figur 1: ein Ausführungsbeispiel für eine erfindungsgemäße Insassenschutzvorrichtung, die durch einen Gurtaufroller gebildet ist,
- Figur 2: den Anschlussbereich eines Gasgenerators des Gurtaufrollers gemäß Figur 1 an ein Zuführungsrohr des Gurtaufrollers gemäß Figur 1 näher im Detail,
- Figur 3: ein Ausführungsbeispiel, nicht gemäß der Erfindung, für ein temperaturabhängig arbeitendes Sicherheitsventil für den Gurtaufroller gemäß Figur 1 während der Montage,
- Figur 4: das Sicherheitsventil gemäß Figur 3 nach Abschluss der Montage,
- Figur 5: ein Verriegelungselement des Sicherheitsventils gemäß den Figuren 3 und 4 in einer Draufsicht,
- Figur 6: ein weiteres Ausführungsbeispiel, nicht gemäß der Erfindung, für ein temperaturabhängig arbeitendes Sicherheitsventil für den Gurtaufroller gemäß Figur 1,
- Figur 7: eine Ausführung gemäß der Erfindung für ein temperaturabhängig arbeitendes Sicherheitsventil in Form eines Stifts mit umgeformtem Stiftende,
- Figur 8: den Stift gemäß Figur 7 nach dem Umformen,
- Figuren 9-11: beispielhaft, nicht gemäß der Erfindung, die Herstellung eines Sicherheitsventils, das mit einem Blindniet gebildet wird, wobei die Figuren 9 bis 10 die Herstellung eines solchen Blindniets beispielhaft zeigen und
- Figur 12: ein weiteres Ausführungsbeispiel, nicht gemäß der Erfindung, für ein Sicherheitsventil für den Gurtaufroller gemäß Figur 1, wobei das Sicherheitsventil eine Folie umfasst.

In den Figuren werden der Übersicht halber für identische oder vergleichbare Komponenten stets dieselben Bezugszeichen verwendet.

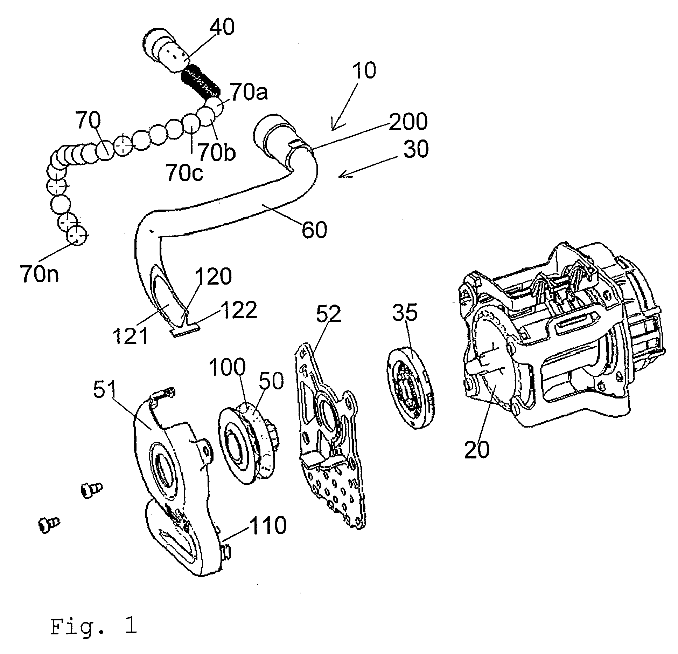

In der Figur 1 sieht man in einer schematischen Explosionsdarstellung ein Ausführungsbeispiel für eine Insassenschutzvorrichtung, die durch einen Gurtaufroller 10 gebildet ist. Der Gurtaufroller 10 weist unter anderem eine Gurtspindel 20, einen Strafferantrieb 30 sowie eine den Strafferantrieb 30 und die Gurtspindel 20 verbindende Massenträgheitskupplung 35 auf.

Der Strafferantrieb 30 umfasst einen pyrotechnischen Gasgenerator 40, beispielsweise in Form eines Mikrogasgenerators, ein Antriebsrad 50, ein den Gasgenerator 40 und das Antriebsrad 50 verbindendes gekrümmtes Zuführungsrohr 60 sowie eine Mehrzahl an Masse- bzw. Schubkörpern 70a bis 70n. Die Schubkörper 70 sind beispielsweise kugelförmig.

Das Antriebsrad 50 ist zwischen einer Haltekappe 51 und einer Halteplatte 52 drehbar gehalten und weist Aufnahmeschalen 100 auf, in die die Schubkörper 70 eingreifen, um das Antriebsrad anzutreiben. Die Schubkörper 70 werden hierzu tangential in das Antriebsrad 50 eingekoppelt und laufen an diesem unter Eingriff in die Aufnahmeschalen 100 tangential vorbei, um anschließend in einen nachgeordneten Aufnahmebehälter 110 zu gelangen.

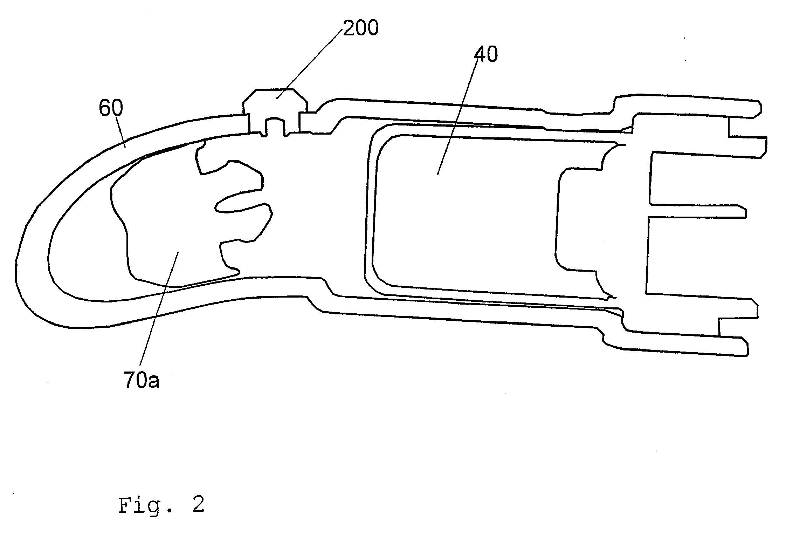

In der Figur 2 ist das Verbindungsstück zwischen dem Gasgenerator 40 und dem Zuführungsrohr 60 näher im Detail dargestellt. Man erkennt, dass zwischen dem ersten Schubkörper 70a und dem Gasgenerator 40 ein nach außen führendes temperaturabhängig arbeitendes Sicherheitsventil 200 am Zuführungsrohr 60 angeordnet ist.

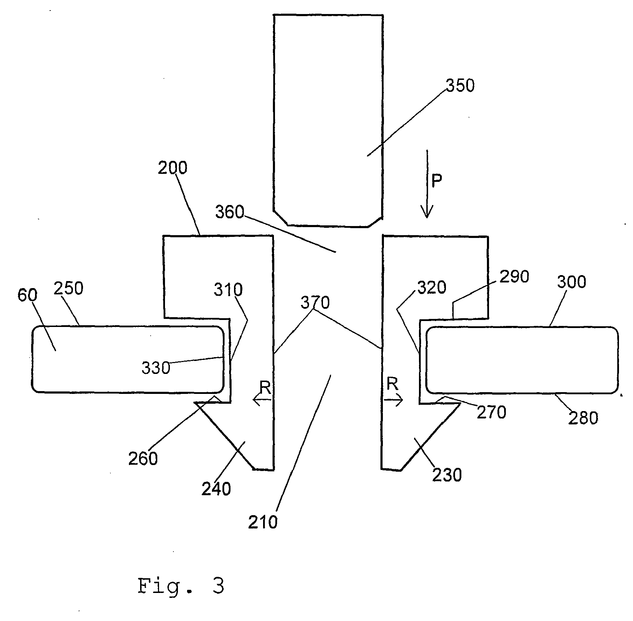

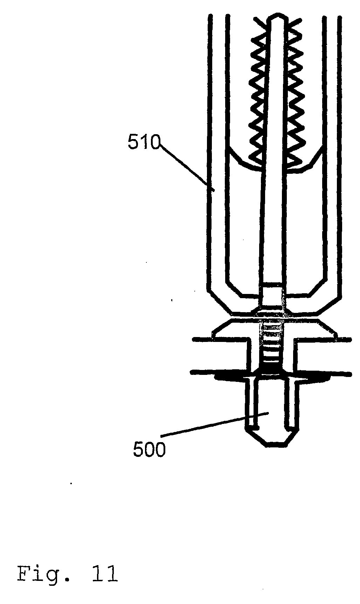

Ausführungsbeispiele für das Sicherheitsventil 200 werden nachfolgend im Zusammenhang mit den Figuren 3 bis 12 näher erläutert.

In der Figur 3 ist ein Ausführungsbeispiel für ein Sicherheitsventil 200, nicht gemäß der Erfindung, gezeigt, das durch ein Loch 210 in dem Zuführungsrohr 60 sowie ein in das Loch 210 eingesetztes Verschlusselement 220 gebildet ist. Das Verschlusselement 220 ist entlang der Pfeilrichtung P durch das Loch 210 hindurchgeschoben, so dass zwei Schnappelemente 230 und 240 des Verschlusselements 220 mit der Wand 250 des Zuführungsrohres 60 verschnappen können. Aufgrund dieses Verschnappens liegen die innen liegenden Kanten 260 und 270 der beiden Schnappelemente 230 und 240 an der Innenseite 280 der Wand 250 an.

Durch das Verschnappen der beiden Schnappelemente 230 und 240 wird darüber hinaus die außen liegende Kante 290 des Verschlusselements 220 auf die Außenseite 300 der Wand 250 gedrückt. Darüber hinaus kommt es zu einem Anliegen der Seitenwände 310 und 320 der beiden Schnappelemente 230 und 240 an der Lochwand 330 des Loches 210.

Um zu verhindern, dass das Verschlusselement 220 ungewollt, beispielsweise durch einen Überdruck im Zuführungsrohr 60, aus dem Loch 210 herausgedrückt werden kann, ist ein Verriegelungselement 350 vorgesehen, das in eine Ausnehmung in Form eines Durchgangslochs 360 des Verschlusselements 220 eingeführt ist. Die Längsrichtung des Durchgangslochs 360 und damit die Längsrichtung des Verriegelungselements 350 erstrecken sich vorzugsweise
- senkrecht, zumindest näherungsweise senkrecht, zu den innenliegenden Kanten 260 und 270 der beiden Schnappelemente 230 und 240, und/oder
- senkrecht, zumindest näherungsweise senkrecht, zur außen liegenden Kante 290 des Verschlusselements, und/oder
- parallel, zumindest näherungsweise parallel, zur Lochwand 330 des Lochs 210, und/oder
- parallel, zumindest näherungsweise parallel, zu den Seitenwänden 310 und 320 der der beiden Schnappelemente 230 und 240.

Die Aufgabe des Verriegelungselements 350 besteht darin, die Innenflächen 370 der beiden Schnappelemente 230 und 240 radial - also entlang der Pfeilrichtungen R nach außen - zu drücken, so dass die Seitenwände 310 und 320 noch fester an die Lochwand 330 gedrückt werden. Mit anderen Worten besteht die wesentliche Funktion des Verriegelungselements 350 darin, sicherzustellen, dass es zu keinem Herausdrücken des Verschlusselements 220 kommen kann, solange eine vorgegebene Materialgrenztemperatur für das Verschlusselement 220 noch nicht erreicht bzw. noch nicht überschritten ist.

Überschreitet jedoch die Temperatur die Materialgrenztemperatur, die durch das Material des Verschlusselements 220 vorgegeben ist, so wird das Verschlusselement 220 seine Funktionsfähigkeit bzw. Dichtigkeit (beispielsweise durch Weichwerden oder Schmelzen) verlieren und bei Überdruck innerhalb des Zuführungsrohres 60 aus dem Loch 210 herausgedrückt werden, so dass das Gas des Gasgenerators 40 gemäß Figur 1 durch das Loch 210 des Zuführungsrohres 60 nach außen dringen kann.

Bei dem Ausführungsbeispiel, nicht gemäß der Erdindung, gemäß Figur 3 sind verschiedene Ausführungsformen denkbar:
1. Es wird das Verschlusselement 220 insgesamt aus einem temperaturempfindlichen Material hergestellt.
2. Es werden alle Teile des Verschlusselements 220 mit Ausnahme des Verriegelungselements 350 aus einem temperaturempfindlichen Material hergestellt.
3. Es wird nur das Verriegelungselement 350 aus einem temperaturempfindlichen Material hergestellt; die übrigen Bestandteile des Verschlusselements 220 bestehen aus einem demgegenüber temperaturbeständigeren Material.

Bei der Ausführungsform gemäß Figur 3 können das Verriegelungselement 350 beispielsweise aus Kunststoff oder Metall, insbesondere einem Lotmaterial, mit einer kleinen Schmelztemperatur und die übrigen Bestandteile aus einem anderen Material mit einer höheren Schmelztemperatur bestehen.

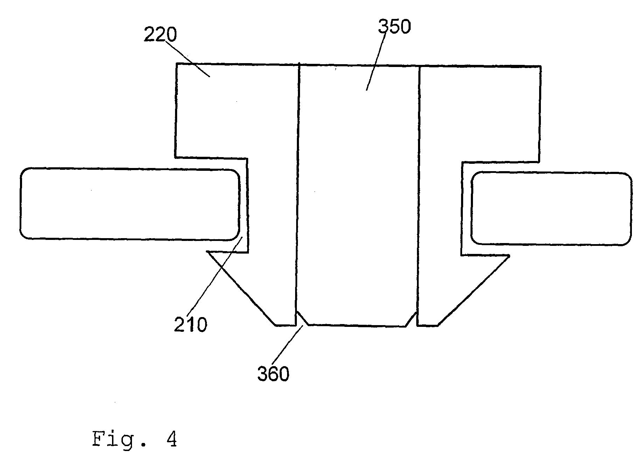

Die Figur 4 zeigt beispielhaft das Verschlusselement 220, nachdem das Verriegelungselement 350 in das Durchgangsloch 360 eingeführt worden ist und die Montage des Verschlusselements 220 in dem Loch 210 abgeschlossen worden ist.

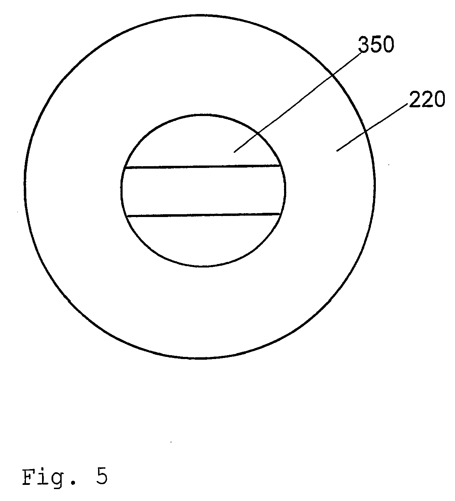

Die Figur 5 zeigt beispielhaft das Verschlusselement 220 gemäß den Figuren 3 und 4 in der Draufsicht. Man erkennt das Verschlusselement 350, das beispielsweise im Querschnitt kreisförmig ausgestaltet sein kann.

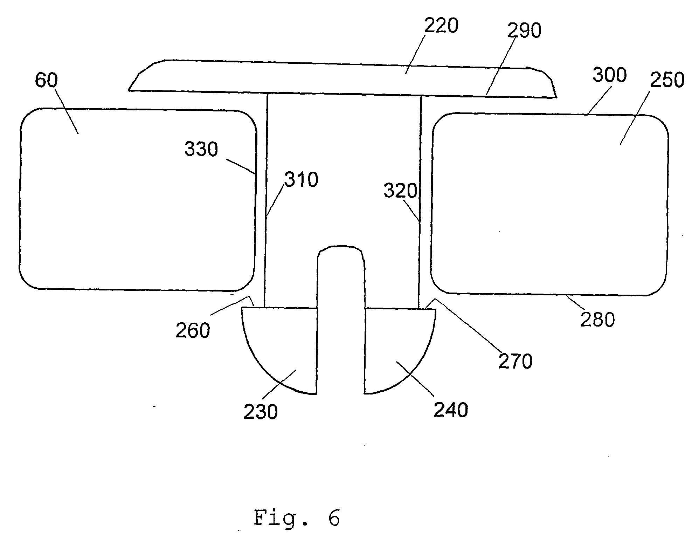

In der Figur 6 ist ein weiteres Ausführungsbeispiel für ein temperaturabhängig arbeitendes Sicherheitsventil 200, nicht gemäß der Erdindung, gemäß

Figur 1 gezeigt. Man erkennt ein Verschlusselement 220, das von seiner Konstruktion und seinem Aufbau dem Verschlusselement 220 gemäß Figur 3 entspricht. Im Unterschied zu dem Ausführungsbeispiel gemäß Figur 3 fehlt lediglich die Ausnehmung bzw. das Durchgangsloch 360 sowie damit die Möglichkeit, ein Verriegelungselement 350, wie es in der Figur 3 dargestellt ist, einzusetzen. Das Verschlusselement 220 gemäß Figur 6 verriegelt somit ausschließlich durch die Schnappelemente 230 und 240, die mit ihren innen liegenden Kanten 260 und 270 an der Innenseite 280 der Wand 250 verschnappen sowie mit ihren Seitenwänden 310 und 320 an der Lochwand 330 des Lochs 210 im Zuführungsrohr 60 anliegen. Das Verschlusselement 220 umfasst darüber hinaus eine außen liegende Kante 290, die auf der Außenseite 300 der Wand anliegt, um die Fixierung des Verschlusselements 220 zu gewährleisten.

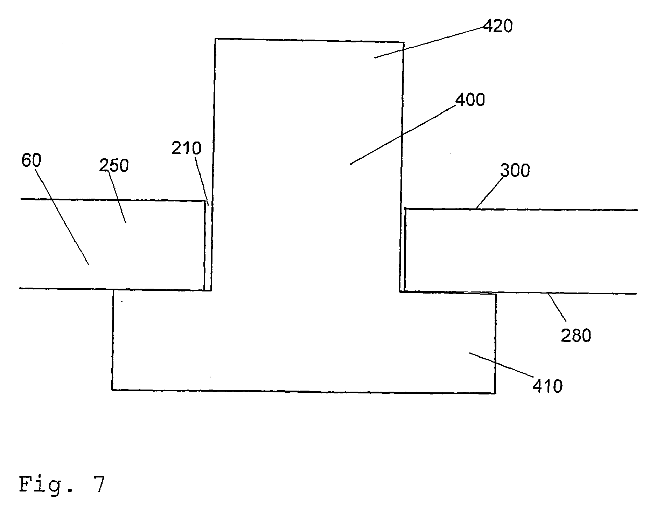

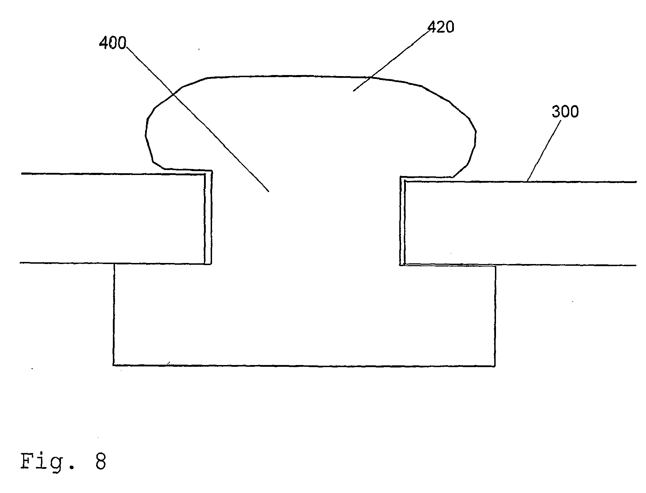

In der Figur 7 ist ein Sicherheitsventil 200 gemäß der Erdindung für den Gurtaufroller gemäß Figur 1 gezeigt, das einen Stift 400 umfasst. Der Stift 400 weist einen Stiftkopf 410 sowie ein Stiftende 420 auf. Zur Montage wird das Stiftende 420 vom Inneren des Zuführungsrohres 60 durch das Loch 210 hindurchgesteckt, bis der Stiftkopf 410 an der Innenseite 280 der Wand 250 des Zuführungsrohres 60 anliegt. Anschließend wird das Stiftende 420, das sich auf der Außenseite 300 der Wand 250 befindet, plastisch umgeformt, so dass der Querschnitt des Stiftendes größer als der Querschnitt des Loches 210 wird (vgl. Figur 8). Der Stift 400 ist somit durch plastisches Umformen fest mit dem Loch 210 verbunden und verschließt das Loch 210 gasdicht. Solange die Stifttemperatur eine Materialgrenztemperatur des Stiftes unterschreitet, wird der Stift 400 das Führungsrohr 60 abdichten, auch wenn der Gasgenerator 40 einen hohen Gasdruck erzeugt. Wird jedoch die Materialgrenztemperatur des Stifts 400 überschritten, so wird sich die Verschlussfähigkeit des Materials des Verschlusselements (beispielsweise durch Weichwerden oder Schmelzen) reduzieren, so dass der Stift 400, spätestens bei Gasbeaufschlagung durch den Gasgenerator, das Loch 210 freigeben wird und das Gas des Gasgenerators aus dem Zuführungsrohr 60 nach außen austreten kann.

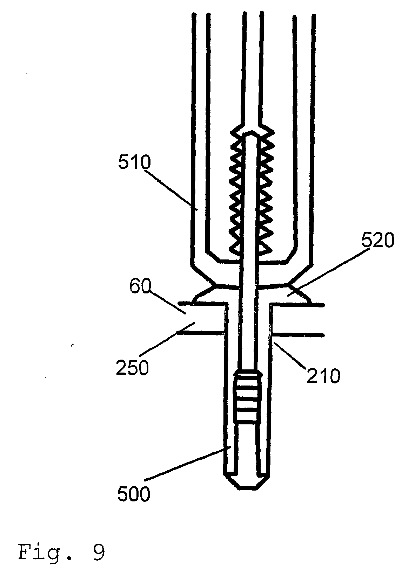

Im Zusammenhang mit den Figuren 9 bis 11 wird nun beispielhaft erläutert, wie ein temperaturabhängig arbeitendes Sicherheitsventil, nicht gemäß der Erfindung, mit einem Blindniet 500 gebildet werden kann. So zeigt die Figur 9 ein Blindnietwerkzeug 510, mit dem ein Blindnietrohling 520 durch ein Loch 210 in der Wand 250 des Zuführungsrohres 60 hindurchgeschoben wird.

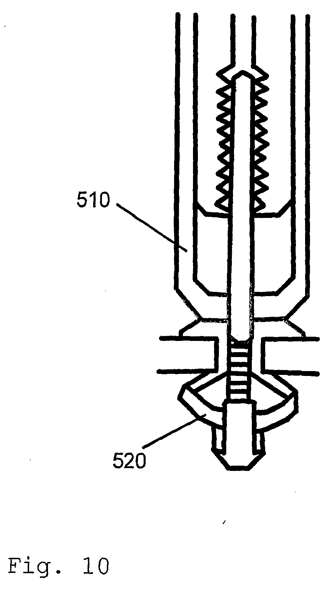

Nach dem Hindurchschieben des Blindnietrohlings 520 wird das Blindnietwerkzeug 510 aktiviert und der Blindnietrohling 520 deformiert. Dies zeigt beispielhaft die Figur 10.

Sobald die Deformation des Blindnietrohlings 520 abgeschlossen und der Blindniet 500 fertiggestellt ist, wird das Blindnietwerkzeug 510 vom Blindniet 500 getrennt. Die Herstellung eines temperaturabhängig arbeitenden Sicherheitsventils ist somit fertiggestellt. Das Sicherheitsventil wird durch den Blindniet 500 und das Loch 210 in der Wand 250 des Zuführungsrohres 60 gebildet. Der Blindniet 500 wird das Loch 210 gasdicht verschließen, solange die Temperatur des Blindniets 500 die Materialgrenztemperatur des Blindniets nicht überschreitet. Erreicht oder überschreitet jedoch die Temperatur des Blindniets die Materialgrenztemperatur, so wird dieser ganz oder teilweise seine Verschlussfähigkeit (beispielsweise durch Weichwerden oder Schmelzen) verlieren und spätestens bei Überdruck durch den Gasgenerator 40 das Loch 210 freigeben und aus diesem herausgedrückt werden. Der Blindniet 500 bildet somit im Zusammenspiel mit dem Loch 210 ein temperaturabhängig arbeitendes Sicherheitsventil, das für den Gurtaufroller gemäß Figur 1 eingesetzt werden kann.

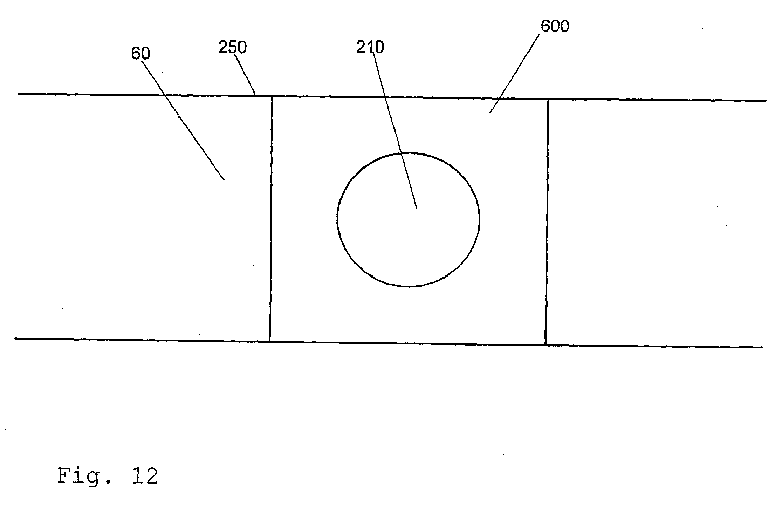

Die Figur 12 zeigt beispielhaft eine weitere Variante für ein Sicherheitsventil, nicht gemäß der Erfindung, für den Gurtaufroller gemäß Figur 1. Man erkennt das Zuführungsrohr 60, in dessen Wand 250 ein Loch 210, beispielsweise durch Bohren, hergestellt worden ist. Das Loch 210 ist durch eine Folie 600 abgeschlossen, die von außen oder von innen auf das Loch 210 aufgebracht worden ist und das Loch 210 gasdicht verschließt.

Solange die Temperatur der Folie 600 die Materialgrenztemperatur der Folie 600 unterschreitet, kann die Folie 600 das Loch 210 gasdicht verschließen. Überschreitet jedoch die Temperatur der Folie 600 die Materialgrenztemperatur, so wird die Folie ihre Verschlussfähigkeit (beispielsweise durch Weichwerden oder Schmelzen) verlieren und das Loch 210, spätestens bei Gasbeaufschlagung durch den Gasgenerator 40 gemäß Figur 1, freigeben. Die Folie 600 in Verbindung mit dem Loch 210 bildet somit ein temperaturabhängig arbeitendes Sicherheitsventil, das beim Gurtaufroller gemäß Figur 1 eingesetzt werden kann.

### Bezugszeichenliste

- 10: Gurtaufroller
- 20: Gurtspindel
- 30: Strafferantrieb
- 35: Massenträgheitskupplung
- 40: Gasgenerator
- 50: Antriebsrad
- 51: Haltekappe
- 52: Halteplatte
- 60: Zuführungsrohr
- 70: Schubkörper
- 100: Aufnahmeschalen
- 110: Aufnahmebehälter
- 200: Sicherheitsventil
- 210: Loch
- 220: Verschlusselement
- 230: Schnappelement
- 240: Schnappelement
- 250: Wand
- 260: Kante
- 270: Kante
- 280: Innenseite
- 290: Kante
- 300: Außenseite
- 310: Seitenwand
- 320: Seitenwand
- 330: Lochwand
- 350: Verriegelungselement
- 360: Durchgangsloch
- 370: Innenfläche
- 400: Stift
- 410: Stiftkopf
- 420: Stiftende
- 500: Blindniet
- 510: Blindnietwerkzeug
- 520: Blindnietrohling
- 600: Folie

- P: Pfeilrichtung
- R: Pfeilrichtung

## Patentansprüche

1. Insassenschutzvorrichtung mit einem pyrotechnischen Gasgenerator (40), wobei mit dem Gasgenerator ein nach außen führendes temperaturabhängig arbeitendes Sicherheitsventil (200) in Verbindung steht,
**dadurch gekennzeichnet,**
- **dass** ein Verschlusselement des Sicherheitsventils durch einen einen Stiftkopf (410) umfassenden Stift (400) gebildet ist, der von innen in ein Loch (210) in einer Wand eines den Gasgenerator und eine Antriebsvorrichtung verbindenden Zuführungselements derart eingesetzt ist, dass der Stiftkopf an der Innenseite der Wand anliegt und
- **dass** ein durch das Loch nach außen hindurchragendes Stiftende (420) unter Bildung eines Verschlussabschnitts, der im Querschnitt größer als der Querschnitt des Loches ist, plastisch umgeformt ist.

2. Insassenschutzvorrichtung nach Anspruch 1,
**dadurch gekennzeichnet, dass**
- die Insassenschutzvorrichtung durch einen Gurtaufroller (10) mit einem Strafferantrieb (30) gebildet ist, der den Gasgenerator (40), die mit einer Gurtspindel (20) des Gurtaufrollers in Verbindung stehende Antriebsvorrichtung und das Zuführungselement, insbesondere in Form eines Zuführungsrohres (60), umfasst, das den Gasgenerator und die Antriebsvorrichtung verbindet,
- wobei in dem Zuführungselement mehrere Schubkörper (70) vorhanden sind, die nach einem Auslösen des Gasgenerators beschleunigt werden und die Antriebsvorrichtung zum Aufwickeln des Sicherheitsgurtes mittelbar oder unmittelbar antreiben, und
- wobei das Sicherheitsventil das Loch (210) in dem Zuführungselement umfasst und das Loch in dem Abschnitt zwischen dem Gasgenerator (40) und dem ersten Schubkörper (70a) angeordnet ist.

3. Insassenschutzvorrichtung nach Anspruch 2,
**dadurch gekennzeichnet, dass**
- das Sicherheitsventil das Verschlusselement umfasst, das das Sicherheitsventil gasdicht verschließt, solange die Materialtemperatur des Verschlusselements eine Materialgrenztemperatur unterschreitet und
- wobei sich die Verschlussfähigkeit das Materials des Verschlusselements bei Überschreiten der Materialgrenztemperatur reduziert und das Sicherheitsventil, spätestens bei Gasbeaufschlagung durch den Gasgenerator, freigegeben wird,
- wobei die Materialgrenztemperatur kleiner als die Selbstentzündungstemperatur des Gasgenerators und größer als die maximale Temperatur des Betriebstemperaturbereichs des Gasgenerators ist.

4. Verfahren zum Herstellen einer Insassenschutzvorrichtung mit einem pyrotechnischen Gasgenerator, wobei ein nach außen führendes Loch in einem Zuführungselement mit einem temperaturabhängig arbeitenden Verschlusselement verschlossen wird **dadurch gekennzeichnet, dass**
- dass ein Verschlusselement des Sicherheitsventils durch einen einen Stiftkopf (410) umfassenden Stift (400) gebildet wird, der von innen in ein Loch in einer Wand eines den Gasgenerators und eine Antriebsvorrichtung verbindenden Zuführungselements derart eingesetzt wird, dass der Stiftkopf an der Innenseite der Wand anliegt und
- dass das durch das Loch nach außen hindurchragende Stiftende (420) unter Bildung eines Verschlussabschnitts, der im Querschnitt größer als der Querschnitt des Loches ist, plastisch umgeformt wird.

## Claims

1. Occupant protection device having a pyrotechnic gas generator (40), wherein there is connected to the gas generator an outwardly leading safety valve (200) which operates in a temperature-dependent manner, **characterized**
- **in that** a closure element of the safety valve is formed by a pin (400) which comprises a pin head (410) and which is inserted from the inside into a hole (210) in a wall of a supply element which connects the gas generator and a drive device, in such a way that the pin head bears against the inner side of the wall, and
- **in that** a pin end (420) which projects through the hole to the outside is plastically deformed so as to form a closure portion which is larger in cross section than the cross section of the hole.

2. Occupant protection device according to Claim 1, **characterized in that**
- the occupant protection device is formed by a belt retractor (10) with a tensioner drive (30) which comprises the gas generator (40), the drive device connected to a belt spindle (20) of the belt retractor, and the supply element which is in particular in the form of a supply tube (60) which connects the gas generator and the drive device,
- wherein, in the supply element, there are provided multiple thrust bodies (70) which, after a triggering of the gas generator, are accelerated and directly or indirectly drive the drive device so as to wind up the safety belt, and
- wherein the safety valve comprises the hole (210) in the supply element, and the hole is arranged in the portion between the gas generator (40) and the first thrust body (70a).

3. Occupant protection device according to Claim 2, **characterized in that**
- the safety valve comprises the closure element, which closes the safety valve in a gas-tight manner as long as the material temperature of the closure element is below a material threshold temperature, and
- wherein the closure capability of the material of the closure element decreases when the material threshold temperature is exceeded, and the safety valve is opened up at the latest when impinged on by gas from the gas generator,
- wherein the material threshold temperature is lower than the spontaneous ignition temperature of the gas generator and higher than the maximum temperature of the operating temperature range of the gas generator.

4. Method for producing an occupant protection device having a pyrotechnic gas generator, wherein an outwardly leading hole in a supply element is closed off by means of a closure element which operates in a temperature-dependent manner, **characterized**
- **in that** a closure element of the safety valve is formed by a pin (400) which comprises a pin head (410) and which is inserted from the inside into a hole in a wall of a supply element which connects the gas generator and a drive device, in such a way that the pin head bears against the inner side of the wall, and
- **in that** the pin end (420) which projects through the hole to the outside is plastically deformed so as to form a closure portion which is larger in cross section than the cross section of the hole.

## Revendications

1. Dispositif de protection d'occupant comprenant un générateur de gaz pyrotechnique (40), une soupape de sécurité (200) opérant en fonction de la température et conduisant vers l'extérieur étant en liaison avec le générateur de gaz,
**caractérisé en ce que**
- un élément de fermeture de la soupape de sécurité est formé par une goupille (400) comprenant une tête de goupille (410), laquelle goupille est insérée depuis l'intérieur dans un trou (210) dans une paroi d'un élément d'alimentation reliant le générateur de gaz à un dispositif d'entraînement, de telle sorte que la tête de goupille s'applique contre le côté intérieur de la paroi et
- un extrémité de goupille (420) faisant saillie vers l'extérieur à travers le trou est déformée plastiquement en formant une portion de fermeture dont la section transversale est supérieure à la section transversale du trou.

2. Dispositif de protection d'occupant selon la revendication 1,
**caractérisé en ce que**
- le dispositif de protection d'occupant est formé par un enrouleur de ceinture (10) avec un entraînement de mise en tension (30) qui comprend le générateur de gaz (40), le dispositif d'entraînement en liaison avec une broche de ceinture (20) de l'enrouleur de ceinture et l'élément d'alimentation, en particulier sous forme de tube d'alimentation (60), lequel tube d'alimentation relie le générateur de gaz au dispositif d'entraînement,
- plusieurs corps de poussée (70) étant prévus dans l'élément d'alimentation, lesquels sont accélérés après un déclenchement du générateur de gaz et entraînent directement ou indirectement le dispositif d'entraînement de manière à ce qu'il enroule la ceinture de sécurité, et
- la soupape de sécurité comprenant le trou (210) dans l'élément d'alimentation et le trou étant disposé dans la portion entre le générateur de gaz (40) et le premier corps de poussée (70a).

3. Dispositif de protection d'occupant selon la revendication 2,
**caractérisé en ce que**
- la soupape de sécurité comprend l'élément de fermeture qui ferme de manière étanche aux gaz la soupape de sécurité tant que la température du matériau de l'élément de fermeture est en dessous d'une température limite du matériau et
- la capacité de fermeture du matériau de l'élément de fermeture étant réduite en cas de dépassement de la température limite du matériau et la soupape de sécurité, au plus tard au moment de la sollicitation avec le gaz par le générateur de gaz, étant ouverte,
- la température limite du matériau étant inférieure à la température d'auto-allumage du générateur de gaz et étant supérieure à la température maximale de la plage de températures de fonctionnement du générateur de gaz.

4. Procédé de fabrication d'un dispositif de protection d'occupant comprenant un générateur de gaz pyrotechnique, dans lequel un trou conduisant vers l'extérieur dans un élément d'alimentation est fermé avec un élément de fermeture opérant en fonction de la température, **caractérisé en ce que**
- un élément de fermeture de la soupape de sécurité est formé par une goupille (400) comprenant une tête de goupille (410), ladite goupille étant insérée depuis l'intérieur dans un trou dans une paroi d'un élément d'alimentation reliant le générateur de gaz à un dispositif d'entraînement de telle sorte que la tête de goupille s'applique contre le côté intérieur de la paroi et
- l'extrémité de la goupille (420) faisant saillie vers l'extérieur à travers le trou est déformée plastiquement en formant une portion de fermeture dont la section transversale est supérieure à la section transversale du trou.
